# EUROPEAN PATENT APPLICATION

(11) **EP 1 087 250 A1**
(43) Date of publication of application: **28.03.2001**
(21) Application number: 00830630.0
(22) Date of filing: 21.09.2000
(51) Int. Cl.: G02C 1/02

(54) **Eyeglass with improved connection between lens and support frame**

(30) Priority: 21.09.1999 IT BO990108 U
(71) Applicant: Sinthesys S.r.l., 30170 Mestre, Venezia (IT); Carlon, Roberto, 30127 Venezia (IT)
(72) Inventor: Carraro, Mirco, 30121 Venezia (IT); Carlon, Roberto, 30127 Venezia (IT)
(74) Representative: Lanzoni, Luciano

(57) **Abstract**

Eyeglass (10), in which at least a lens (14) of said eyeglasses presents at least a hole (20) for the insertion of a corresponding pivot pin of the support frame (18), in which the external surface of said pivot pin (18) presents at least a radial projection (22') defining means for hooking the internal surface of said hole.

## Description

The present invention relates to an eyeglass. In particular, its subject is an eyeglass wherein a lens of said eyeglass presents at least a hole for the insertion of a corresponding pivot of the support frame of the eyeglass.

Glasses are known which comprise support bars for corresponding lenses or transparent means, in which each bar is connected through suitable connecting means to a corresponding transparent lens and in which said connecting means comprise a pair of fastening pivot pins able to be inserted in corresponding holes provided within said lens.

The insertion of each pivot pin into the corresponding hole provided in the lens normally occurs in a forced manner and adhesion between the pivot pin, which presents a smooth external surface, and the lens is assured by the presence, between the external surface of the pivot pin and the internal surface of the receiving hole, of a considerable amount of adhesive material.

Such a way of operating does not, however, allow to obtain as strong a fastening between the lens and the support frame as desired. The adhesive as such is not always able to withstand the stresses whereto it is subjected.

The use of considerable amounts of glue thus has a negative impact on the durability of the junction between the connecting pivot pins of the load-bearing frame and the corresponding holes provided inside the lens.

Additionally, a junction effected with the use of excessive quantities of glues is also bothersome, difficult to manufacture and costly in terms of time spent by the operator assigned to mount the eyeglass.

There is also, at the time of mounting, the risk of dirtying the lenses and the load-bearing frame of the eyeglass with the aforementioned glue.

An aim of the present invention is to obtain, in an eyeglass of the type mentioned in the preamble to the present description, a stronger and more stable fastening between lens and support frame than those obtained so far with the aforementioned known systems.

Other aims are those of obtaining a fastening between support frame and lens that can be effected rapidly and that is also such as to allow to obtain a reduced cost of manufacture.

Yet a further aim of the present invention is to eliminate the aforementioned drawbacks.

An eyeglass is thus provided, in which at least a lens of said eyeglass presents at least a hole for the insertion of a corresponding pivot pin of the support frame, characterised in that the external surface of said pivot pin presents at least a radial projection defining means for hooking the internal surface of said hole.

According to another point of view, an eyeglass is provided, in which at least a lens of said eyeglass presents at least a hole for the insertion of a corresponding pivot pin of the support frame, characterised in that the external surface of said pivot pin presents at least a radial projection defining an elastically yielding serration when said pivot pin is inserted into the hole and is able firmly to engage said internal surface of said hole when said pivot pin is forced in the opposite direction.

In this way it is possible to have a stronger adhesion between the pivot pin of the support frame the hole in the lens, which allows not to make use of said glue, or which allows not to make use of excessive quantities of adhesive material.

The coupling between support frame and lens can, in addition, be effected in an extremely rapid manner.

The secondary claims describe other advantageous aspects of the invention.

The invention, in its technical features and in its different advantageous aspects, shall become more readily apparent from the detailed description that follows, made with reference to the accompanying drawings, which illustrate an embodiment provided purely by way of non limiting example, in which:
- Figure 1 shows a perspective view of a detail of a pair of eyeglasses of the present invention;
- Figure 2 shows a section view showing the connecting between the lens and the support frame of the present invention;
- Figures 3 and 4 show preferred embodiments of insertion pivot pins according to the present invention;
- Figure 5 shows a detail of a coupling pivot pin showing a section view of the retaining projection.

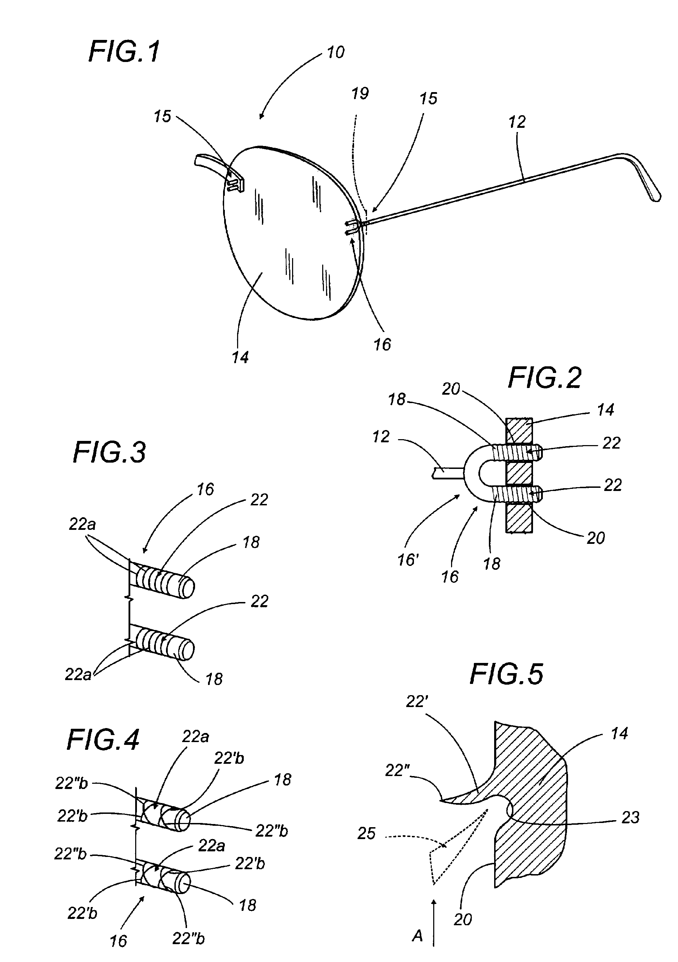

In accordance with the figures of the accompanying drawings, one can observe how a pair of eyeglasses 10 (only a part being shown in Figure 1) according to a preferred embodiment of the present invention comprises a first 12 and a second bar (the latter not being shown in the figure) for supporting corresponding transparent means in the form of a first 14 and a second (the latter not being shown in the figure) transparent lens, which lenses are connected by means of a bridge element 15 (only partially shown in Figure 1).

As shown, in the present eyeglass, each bar 12 is connected by means of suitable connecting means 16 to a corresponding transparent lens 14.

Said connecting means comprise in particular a fork element 16' which defines a first and second pivot pin 18, 18, which are inserted into corresponding first and second hole 20, 20 provided in the corresponding lens 14.

Said connecting means 16 are thus connected through suitable hinge means 19, of a known type and achievable by the person versed in the art, to the corresponding bar 12.

According to the present invention, the external surface of each insertion pivot pin 18 defines means 22 for engagement and adhesion with the internal surface of said insertion hole, in particular it is preferably provided for the external surface of said hole 18 to be suitably rough.

Preferably, on the external surface of the hole a mechanical machining is to be effected, such as to incise the surface of the single pivot pin in such a way as to cause a radial lifting of the shaving or burr 22' which remains adhering to the surface of the pivot pin.

Such burr or projecting shaving 22' allows to obtain a coupling with the internal surface of the corresponding hole of the lens that is definitely effective.

As shown in particular in Figure 5, each radial projection 22' is able to define means for hooking the internal surface of said hole.

Said radial projection 22' substantially defines a serration that yields elastically backwards, when said pivot pin 18 is inserted into the hole 20 (according to the direction indicated by the arrow A of Figure 5), and which is able firmly to engage, in particular to be locked against the internal surface of said hole 22, when said hole is forced in the direction opposite to the direction A.

For this purpose, according to the present embodiment the aforesaid radial projection 22' advantageously presents an inclination at an angle, in the opposite direction from the direction A of insertion into the hole 20, relative to a plane perpendicular to the longitudinal axis of the pivot pin 18.

In a preferred manner said radial projection 22' presents a pointed free end 22', which can be inserted into the internal surface of the housing hole 20, making the coupling between pivot pin and lens particularly firm.

With reference to Figures 3 and 4, one can observe how, in a preferred manner, the external surface of the pivot can present a plurality of mutually distanced circumferential lines or burrs 22a, in a direction axial to the respective pivot pin, provided on the external surface of each pivot pin (Figure 3), or this external surface of the pivot pin can be obtained by means of a first plurality of mutually distanced circumferential lines or burrs 22'b and developing obliquely on said external surface of the pivot pin and a second plurality of circumferential lines or burrs 22"b mutually distanced and developing obliquely on said external surface of the pivot pin 18, in which said second plurality of lines 22"b crosses the oblique lines of the first plurality 22'b (Figure 4). It would also be possible to have a combination of said circumferential lines or burrs lying on a respective plane perpendicular to the axis of the pivot pin and these circumferential lines or burrs lying in a respective plane obliquely oriented relative to the axis of the pivot pin.

The pivot pin 18 is thus inserted into said receiving hole 20 with a simple axial pressure on the pivot pin itself, which is hence locked into the corresponding hole and thereby adheres to the lens.

One could also hypothesise the addition of a modest quantity of glue between the rough surfaced pivot pin and the related hole.

Said adhesive material could advantageously be inserted in grooves or depressions 23 recessed relative to the external surface of the pivot pin which derive from the machining process which roughens the external surface of the pivoting pin.

Obviously, a similar locking coupling of the lens could also be provided between other elements of the load-bearing frame of the eyeglass, for instance between the pivot pins for the attachment of the bridge provided between the lenses of the eyeglasses and the lenses themselves.

It would in any case be conceivable to roughen the external surface of the individual connecting pin in any suitable manner. An advantageous mechanical machining process to be effected could be obtained by means of a cutting element 25 (shown in dashed lines in Figure 5) having a cutting tip that is suitably inclined relative to a plane perpendicular to the axis of the pivot pin.

The provision of projections or lines of the type described above which are present on different areas of the circumference of both the pivot pins of the connecting fork, which pins can be more or less distanced or offset relative to the receiving holes provided in the corresponding lens, allows a certainty of contact of said projecting portions with the surfaces of the connecting holes, all to assure a strong adhesion between pivot pin and receiving hole.

The invention thus conceived can be subject to numerous modifications and variations, without thereby departing from the scope of the inventive concept. Moreover, all components can be replaced by technically equivalent elements.

## Claims

1. An eyeglass (10), in which at least a lens (14) of said eyeglass presents at leas a hole (20) for the insertion of a corresponding pivot pin of the support frame (18), characterised in that the external surface of said pivot pin (18) presents at least a radial projection (22') defining means for hooking the internal surface of said hole.

2. An eyeglass (10), in which at least a lens (14) of said eyeglass presents at least a hole (20) for the insertion of a corresponding pivot pin of the support frame (18), characterised in that the external surface of said pivot pin (18) presents at least a radial projection (22') defining an elastically yielding serration when said pivot pin (18) is inserted into the hole (20) and is able firmly to engage said internal surface of said hole when said pivot pin is forced in the opposite direction.

3. An eyeglass (10) as claimed in claim 2, characterised in that the external surface of said pivot pin (18) presents at least a radial projection (22') inclined by an angle in the direction opposite to the direction of insertion relative to the plane perpendicular to the axis of the pivot pin.

4. An eyeglass as claimed in any of the previous claims, characterised in that said radial projection (22') presents a pointed free end (22").

5. An eyeglass as claimed in any of the previous claims, characterised in that each connecting pivot pin comprises a plurality of circumferential retaining projections (22a) mutually distanced on said external surface of the pivot pin (18).

6. An eyeglass as claimed in any of the previous claims from 1 to 4, characterised in that each connecting pivot pin comprises pluralities of circumferential projections (22'b) mutually distanced and developing obliquely on said external surface of the pivot pin (18).

7. An eyeglass as claimed in claim 6, characterised in that each connecting pin comprises a second plurality of mutually distanced circumferential lines (22"b) developing obliquely on said external surface of the pivot pin (18), said second plurality of lines crossing the oblique lines of the first plurality.

8. An eyeglass as claimed in any of the previous claims, characterised in that adhesive material is provided between the pivot pin (18) and the related hole (20).

9. An eyeglass as claimed in claim 7, characterised in that said adhesive material is housed inside grooves or depressions (23) recessed relative to the external surface of the pivot pin (18).

10. An eyeglass as claimed in any of the previous claims, in which said support frame comprises a fork element (16') defining a first and second pivot pin (18, 18) to be inserted into a corresponding first and second hole (20, 20) provided in the corresponding lens, characterised in that at least one of said pivot pins (18, 18) presents at least a radial engaging projection (22') as claimed in any of the previous claims.

11. An eyeglass (10) as claimed in any of the previous claims, in which said support frame comprises a first and a second bar (12) and/or a bridge element (15) for a first and a second lens (14) of the eyeglass, characterised in that means for connecting each bar and/or said bridge element to the corresponding lens comprise at least a pivot pin (18) or a fork (16) as claimed in the previous claims.
